# EUROPÄISCHE PATENTSCHRIFT

(11) **EP 0 281 600 B1**
(45) Veröffentlichungstag und Bekanntmachung des Hinweises auf die Patenterteilung: **08.06.1994**
(21) Anmeldenummer: 87905950.9
(22) Anmeldetag: 14.09.1987
(51) Int. Cl.: C01B 3/38

(54) **REFORMER FÜR DIE KATALYTISCHE SPALTUNG GASFÖRMIGER KOHLENWASSERSTOFFE**
REFORMER FOR CATALYTIC CRACKING OF GASEOUS HYDROCARBONS
REFORMEUR POUR LE CRAQUAGE CATALYTIQUE D'HYDROCARBURES GAZEUX

(30) Priorität: 15.09.1986 DE 3631366; 15.09.1986 DE 3631365
(43) Veröffentlichungstag der Anmeldung: 14.09.1988
(60) Teilanmeldung: 92121808.7
(73) Patentinhaber: L. & C. Steinmüller GmbH, D-51641 Gummersbach (DE)
(72) Erfinder: PANKNIN, Walter, D-5270 Gummersbach 1 (DE)
(74) Vertreter: Carstens, Wilhelm, Dipl.-Phys.
(86) Internationale Anmeldenummer: EP8700519
(87) Internationale Veröffentlichungsnummer: WO8801983

(56) Entgegenhaltungen:
- FR-A- 2 325 424
- FR-A- 2 374 948
- GB-A- 2 153 382
- Japanese Patent Report, Sect. Ch, vol. 80, no. 17, 23 May 1980, Derwent Publ., Ltd, (London,GB) & JP, B, 80014803, 18. April 1980, see sheet H, page 1
- Patent Abstracts of Japan, vol. 11, no. 267 (C-443) (2714), 28 August 1987, & JP, A, 6265902, see the abstract
- Patents Abstracts of Japan, vol. 11, no. 267, (C-443) (2174). 28 August 1987 & JP,A, 6265903, 25 March 1987
- Chem. Abstracts, vol. 103, no. 24, December 1985, see page 144, abstract 198441f & JP,A, 60103001

## Beschreibung

Die Erfindung betrifft eine Anlage zur katalytischen Spaltung gasförmiger Kohlenwasserstoffe, insbesondere mit Wasserdampf, zu einem Produktgas mit einem aufrecht stehenden Druckbehälter, mit einer Vielzahl von mit einem Primärkatalysator gefüllten Rohren im oberen Teil des Druckbehälters, einem mit Abstand vom Boden des Druckbehälters angeordneten und einen Verbrennungsbereich überspannenden Stützeinbau zum Abstützen einer Sekundärkatalysatorschüttung, wobei die Rohre abströmseitig mit dem mit einer Sauerstoffzufuhr verbundenen Verbrennungsbereich verbunden sind, und der Verbrennungsbereich abströmseitig mit der Sekundärkatalysatorschüttung verbunden ist.

Aus der GB-A-2,153,382 ist eine solche Anlage bekannt, bei der in dem aufrecht stehenden Druckbehälter die mit dem Primärkatalysator gefüllten Rohre oberhalb des Raums des Druckbehälters angeordnet sind, der der Aufnahme der Sekundärkatalysatorschüttung dient. Um eine hinreichende Verweilzeit des aus der Sekundärkatalysatorschüttung austretenden Gases zwischen den mit dem Primärkatalysator gefüllten Rohren zu erreichen, ist eine Vielzahl von Strömungsleitblechen im Primärkatalysator-Rohbündel vorgesehen, die sich senkrecht zu den Rohren erstrecken und den Strömungsweg des aus dem oberen Bereich des Druckbehälters abgeführten Gases verlängern. Diese Anordnung führt zu einer großen Bauhöhe des Druckbehälters und zu den zusätzlichen Strömungsleitblechen.

Es ist die Aufgabe der vorliegenden Erfindung, eine Anlage zu schaffen, bei der der Wärmeübergang aus dem die Primärkatalysator-Rohre strömenden Gas in die Rohre hinein verbessert und zugleich die Baulänge des erforderlichen Druckbehälters verkürzt wird.

Diese Aufgabe wird dadurch gelöst, daß die Sekundärkatalysatorschüttung zwischen die mit dem Primärkatalysator gefüllten Rohre eingebracht ist.

Auf diese Weise wird zwischen dem Sekundärkatalysator und dem Primärkatalysator eine zusätzliche Wärmeleitung über Feststoff-Feststoff-Kontakt aufgebaut. Gasleitbleche sind nicht erforderlich. Die Sekundärkatalysatorschüttung sorgt ebenfalls für eine gleichmäßige Verteilung des aus dem Verbrennungsbereich aufsteigenden heißen Gases um die mit Primärkatalysator gefüllten Rohre herum. Durch das Eintauchen der Rohre in die Sekundärkatalysatorschüttung werden diese zusätzlich stabilisiert.

Da das zwischen den mit Primärkatalysator gefüllten Rohren vorhandene Volumen von der Sekundärkatalysatorschüttung aufgefüllt wird, kann die Höhe des Druckbehälters wesentlich verkürzt werden.

Vorzugsweise ist der als Gewölbe ausgebildete Stützeinbau aus keramischem Werkstoff gefertigt. Bei Verwendung eines Stützeinbaus aus keramischem Werkstoff ist die Lastabtragung dieser Gewichte auf den Druckbehälter außerordentlich günstig. Zusätzlich werden Differenzdehnungen weitgehendst reduziert. Das Gewölbe kann freitragend, mittig oder mehrfach abgestützt sein.

Relativ große Reformereinheiten können gebaut werden, wenn die Rohre auf dem Stützeinbau aufstehen.

Es ist jedoch auch möglich, daß die Rohre in dem Behälter aufgehängt sind.

Im Falle der stehenden Rohre ist es von Vorteil, wenn sie über eine Verteilerschicht aus Verteilersteinen auf dem Stützeinbau abgestützt sind.

Die Erfindung soll nun anhand der beigefügten FIG. 1 - 4 näher erläutert werden. Es zeigt:
- FIG. 1: einen Längsschnitt durch einen Primär-Sekundärreformer mit auf einer Verteilerschicht abgestützten und mit Primärkatalysator gefüllten Spaltrohren, wobei der Sekundärkatalysator als Schüttung zwischen die Spaltrohre eingebracht ist,
- FIG. 2: einen Schnitt längs der Linie II - II in FIG. 3 durch eine auf den Stützeinbau aufgebrachte Verteilerschicht aus mehreren zusammengesetzten Verteilersteinen
- FIG. 3: einen Schnitt längs der Linie III - III in FIG. 2 und
- FIG. 4: einen Schnitt durch eine Verteilung abgewandelter Formen von Verteilersteinen.

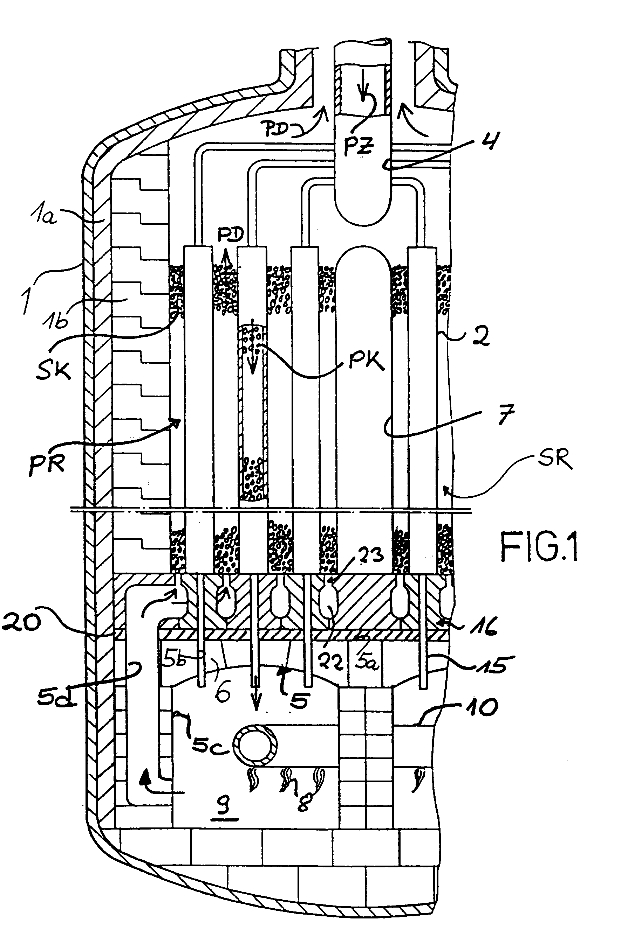

Gemäß FIG. 1 ist der stehende Druckbehälter 1 mit einer Isolierausmauerung 1a und ggf. einer (1b) oder meherer weiterer Isolierschichten versehen. Im oberen Teil des Druckbehälters sind eine Vielzahl von Spaltrohren 2 angeordnet, die an ihren oberen Enden mit einem Sammler 4 verbunden sind. Die einen Primärreformer PR darstellenden Spaltrohre 2 sind mit einem Primärkatalysator PK gefüllt. Die Rohre 2 ruhen auf einem sich quer durch den Behälter erstreckenden Deckengewölbe 5 aus hochtemperaturbeständigen Bausteinen 6 aus einem keramischen Werkstoff, z. B. Al₂O₃ oder SiO₂.

Das oben im Behälter 1 in den Sammler 4 eintretende Prozeßgas PZ durchströmt die Spaltrohre 2 und tritt durch im Gewölbe 5 vorgesehene Kanäle 5b in einen von dem Deckengewölbe überspannten Gassammelraum 9 ein und wird aus diesem zur Seite über Kanäle 5d in einer das Gewölbe auf den Behälterboden abstützenden Wand 5c abgezogen Über eine oder mehrere mit Brennern 8 versehene Leitungen 10 werden dem in den Sammelraum 9 eintretenden Gas mindestens Sauerstoff und evtl. zusätzlich über eine oder mehrere Zusatzleitungen (nicht gezeigt) brennbare Kohlenwasserstoffe, CO₂ und/oder Dampf zugemischt und ein Teil der über die Kanäle 5b in den Raum 9 eintretenden Gase verbrannt. Das durch die Brennerkammen aufgeheizte Gas durchströmt die den Sekundärreformer SR bildende Sekundärkatalysatorschüttung SK. Aus dieser Schüttung wird das Produktgas PD am oberen Ende des Druckbehälters abgezogen.

Zwischen dem Stützeinbau 5 und dem unteren Ende des Sammlers 4 ist ein Verdrängerkörper 7 angeordnet, falls dies aus Strömungsgründen erforderlich ist.

Die Spaltrohre 2 sind an ihren unteren Enden mit im Durchmesser reduzierten Gasführungsrohren 15 verbunden. Die Rohre 2 und die Gasführungsrohre 15 können auch einstückig miteinander ausgebildet sein. Die Gasführungsrohre 15 durchgreifen eine auf der Oberseite 5a aufliegende Verteilerschicht 16 aus Gasverteilungssteinen 17 und die Öffnungen 5b des Deckengewölbes selbst. Die Beaufschlagung der Gasverteilungsschicht 16 erfolgt vom Rand her über die Kanäle 5d in der Wand 5c, so daß das in dem Raum 9 erhitzte Gas direkt der Verteilerschicht 16 zugeführt wird.

Für den Fall, daß keine Sekundärkatalysatorschüttung erforderlich ist, die bis zum unteren Ende der Spaltrohre 2 reicht, ist es denkbar, als Verdränger eine "Dummy"-Katalysatorschüttung auf die Sekundärkatalysatorschüttung aufzuschütten, d. h. eine katalytisch inaktive Deckschicht.

In der FIG. 1 ist der Behälter 1 zur Vereinfachung der Darstellung einstückig dargestellt. Er kann selbstverständlich aber aus mittels Flanschen verbundenen Teilen bestehen. Weiterhin sind Mannlöcher und evtl. vorhandene gesonderte Öffnungen für das Einfüllen und/oder Abziehen von Katalysatormaterial aus denselben Gründen nicht dargestellt.

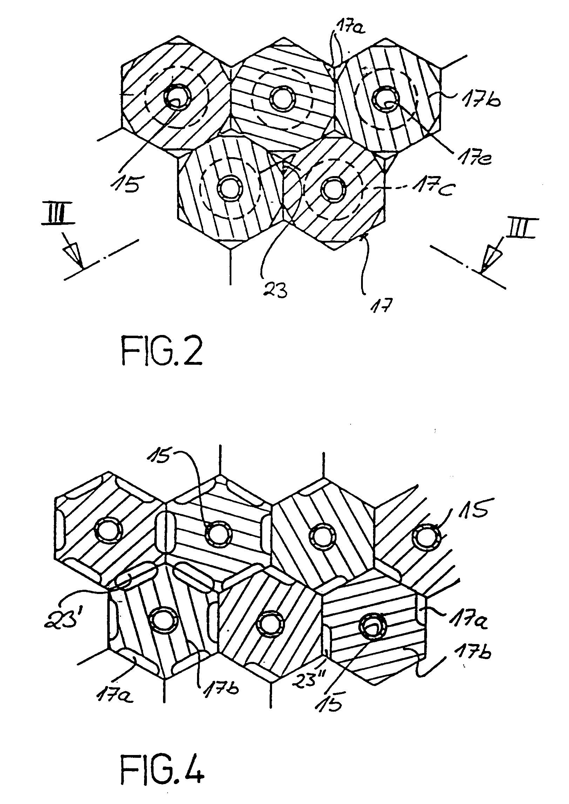

Anhand der FIG. 2 - 4, soll nun die Funktionsweise der Verteilerschicht 16 näher erläutert werden.

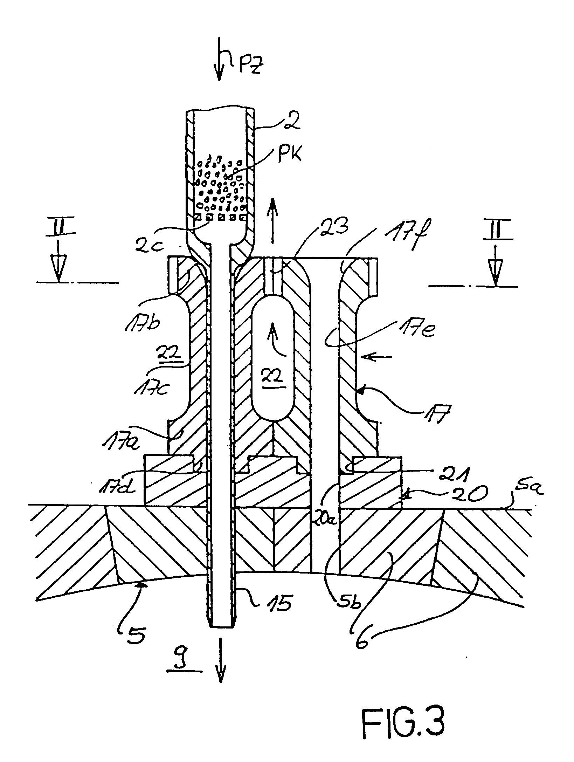

Bei der in den FIG. 2 und 3 gezeigten Ausführungsform besitzen die Verteilersteine 17 einen Standabschnitt 17a und einen Kopfabschnitt 17b, die durch einen Säulenabschnitt 17c miteinander verbunden sind. Standabschnitt 17a und Kopfabschnitt 17b weisen einen hexagonalen Querschnitt auf, wobei jedoch im Falle des Kopfabschnitts 17b die Ecken gebrochen sind. Der Säulenabschnitt 17c weist einem im Durchmesser reduzierten kreisförmigen Querschnitt auf.

Der Standabschnitt 17a ist auf seiner Unterseite mit einem Führungszapfen 17d versehen. Jeder Stein ist von einem an den Durchmesser der Gasleitungsrohre 15 angepassten mittigen Kanal 17e versehen, der im Bereich des Kopfabschnitts 17b mit einer konischen Ausweitung 17f versehen ist.

Der Katalysator Pk ist im einzelnen Rohr 2 durch ein Lochgitter 2c gehalten.

Auf der Oberseite 5a des Deckengewölbes oder in einer gesonderten Lage aus Formsteinen 20 sind an den Führungszapfen 17d angepasste Ausnehmungen 21 vorgesehen. Die Formsteine 20 und die Steine des Deckengewölbes sind mit dem Kanal 17e entsprechenden Bohrungen 20a bzw. Kanälen 5b versehen.

Wie aus den FIG. 2 und 3 ersichtlich ist, bildet sich beim Zusammenstellen einer Vielzahl der Formsteine 17 zwischen den Säulenabschnitten 17c ein gitterartiger Gasverteilungshohlraum 22 , in den das heiße Gas aus dem Raum 9 eintreten kann. Aus diesem Gasverteilungsgitter tritt das heiße Gas durch die von den gebrochenen Kanten der Kopfabschnitte gebildeten Gasführungskanäle 23 in den Bereich des Sekundär-Katalysators ein. Die Verteilersteine 17 leiten zum einen die Last der mit dem Katalysator gefüllten Spaltrohre 2 in das Deckengewölbe 5 ein und ermöglichen zum anderen die Verteilung des Gases. Die Steine stellen gleichzeitig die untere Führungsplatte für die Spaltrohre dar. Damit das aus den Führungsrohren 15 austretende Gas auch in den Sammelraum 9 einströmt, muß eine Abdichtung zum oberen Strömungsraum erfolgen. Diese Abdichtung wird zum einen durch den Eingriff des Zapfens 17d in die Steine 20 bzw. in das Deckengewölbe 5 erreicht und zum anderen durch das Aufliegen des Spaltrohrbodens im Bereich der konischen Aufweitung 17f auf dem einzelnen Verteilerstein. Zusätzlich stellt der enge Spalt des Führungsrohres in den Steinen 20 und/oder den Steinen des Gewölbes 5 eine sogenannte Spaltdichtung dar. Die Wirkung dieser Spaltdichtung könnte noch dadurch erhöht werden, daß im Bereich der Steine 20 bzw. der Steine des Deckengewölbes 5 eine Labyrinthdichtung vorgesehen wird.

Da das Spaltrohr 2 nur auf dem Verteilerstein 17 aufliegt, ist bei Betrieb keine Kraft in radialer Richtung vorhanden. Jedoch können leichte Unsymmetrien hinsichtlich der radialen Kräfte entstehen, die dann durch ein geringes Verbiegen des Gasführungsrohres 15 im Bereich der konischen Erweiterung 17f aufgenommen werden können. Das Gasführungsrohr 15 des einzelnen Spaltrohrs 2 kann leicht aus dem Formstein 17 herausgezogen und ausgetauscht werden.

Bei der Ausführungsform gemäß FIG. 4 sind nicht die hexagonalen Ecken der Kopfabschnitte 17 gebrochen, sondern entsprechende Ausnehmungen sind am Kopfabschnitt entweder an gegenüberliegenden Seiten zweier Steine vorgesehen und bilden Kanäle 23' (vgl. in der FIG. 4 linkes Tripel von Bausteinen 17 ), oder jeweils an mindestens einer Seite eines Steines ist eine hinreichend große Ausnehmung vorgesehen, die zusammen mit einer nicht ausgenommenen Seite einen Gasführungskanal 23'' bilden. (Vergleiche das rechte Tripel von Verteilersteinen in der FIG. 4.) Hinsichtlich Geometrie und Ausbildung wird insb. auf die FIG. 2, 3 und 4 hingewiesen. Andere Geometrien für die Verteilersteine sind denkbar, z. B. quaderförmige.

## Patentansprüche

1. Anlage zur katalytischen Spaltung gasförmiger Kohlenwasserstoffe, insbesondere mit Wasserdampf, zu einem Produktgas mit einem aufrecht stehenden Druckbehälter, mit einer Vielzahl von mit einem Primärkatalysator gefüllten Rohren im oberen Teil des Druckbehälters, einem mit Abstand vom Boden des Druckbehälters angeordneten und einen Verbrennungsbereich überspannenden Stützeinbau zum Abstützen einer Sekundärkatalysatorschüttung, wobei die Rohre abströmseitig mit dem mit einer Sauerstoffzufuhr verbundenen Verbrennungsbereich verbunden sind, und der Verbrennungsbereich abströmseitig mit der Sekundärkatalysatorschüttung verbunden ist,
**dadurch gekennzeichnet**, daß die Sekundärkatalysatorschüttung (SK) zwischen die mit dem Primärkatalysator (PK) gefüllten Rohre (2) eingebracht ist.

2. Anlage nach Anspruch 1, **dadurch gekennzeichnet**, daß der als Gewölbe ausgebildete Stützeinbau (5) aus keramischem Werkstoff gefertigt ist.

3. Anlage nach Anspruch 1 oder 2, **dadurch gekennzeichnet**, daß die Rohre auf dem Stützeinbau (5) aufstehen.

4. Anlage nach Anspruch 1 oder 2,
**dadurch gekennzeichnet,** daß die Rohre (2) in dem Behälter aufgehängt sind.

5. Anlage nach einem der Ansprüche 1 - 4,
**dadurch gekennzeichnet,** daß die stehenden Rohre (2) über eine Verteilerschicht (16) aus Verteilersteinen (17) auf dem Stützeinbau (5) angeordnet sind.

## Claims

1. Installation for the catalytic cracking of hydrocarbons, especially with steam, into a product gas with an upright standing pressure vessel, a plurality of tubes filled with a primary catalyst in the upper part of the pressure vessel, and a support structure extending over a combustion area for the support of a secondary catalyst packing, said tubes being connected on their flow off side with the combustion area being connected with a oxygen supply and the combustion area being conncted on the flow off side with the secondary catalyst packing,
characterized in that the secondary catalyst packing (SK) is placed between the tubes (2) filled with the primary catalyst (PK).

2. Installation according to claim 1,
characterized in that the support structure formed as a vault is made of a ceramic material.

3. Installation according to claim 1 or 2,
characterized in that the tubes stand on the support structure (5).

4. Installation according to claim 1 or 2,
characterized in that the tubes (2) are suspended in the vessel.

5. Installation according to one of the claims 1-4,
characterized in that the standing tubes (2) are supported by means of a distributing layer (16) made up of distributing bricks (17) on the support structure (5).

## Revendications

1. Installation de craquage catalytique d'hydrocarbures gazeux, notamment à la vapeur d'eau, en vue de produire un gaz industriel, comprenant une cuve sous pression disposée verticalement, une pluralité de tubes, remplis de catalyseur primaire et disposés dans la partie supérieure de la cuve sous pression, et une structure interne d'appui qui est disposée à une certaine distance du fond de la cuve sous pression et qui s'étend au-dessus d'une zone de combustion et sert à supporter une masse en vrac de catalyseur secondaire, tandis que, du côté aval de l'écoulement, les tubes communiquent avec la zone de combustion, reliée à une source d'oxygène, et que, du côté aval de l'écoulement, la zone de combustion communique avec la masse en vrac de catalyseur secondaire, caractérisée en ce que la masse en vrac de catalyseur secondaire (SK) est disposée entre les tubes (2) remplis du catalyseur primaire (PK).

2. Installation suivant la revendication 1, caractérisée en ce que la structure interne d'appui (5), réalisée sous la forme d'une voûte, est en matière céramique.

3. Installation suivant l'une des revendications 1 et 2, caractérisée en ce que les tubes se dressent sur la structure interne d'appui (5).

4. Installation suivant l'une des revendications 1 et 2, caractérisée en ce que les tubes (2) sont suspendus dans la cuve.

5. Installation suivant l'une des revendications 1 à 4, caractérisée en ce que les tubes (2), disposés verticalement, sont placés sur la structure interne d'appui (5) par l'intermédiaire d'une couche de répartition (16) formée de briques de répartition (17).
